# FASCICULE DE BREVET EUROPEEN

(11) **EP 3 527 967 B1**
(45) Date de publication et mention de la délivrance du brevet: **12.08.2020**
(21) Numéro de dépôt: 19157895.4
(22) Date de dépôt: 19.02.2019
(51) Int. Cl.: G01N 21/17

(54) **CAPTEUR PHOTO-ACOUSTIQUE AVEC COUPLAGE OPTO-MÉCANIQUE**
AKUSTOOPTISCHER DETEKTOR MIT OPTOMECHANISCHER KOPPLUNG
ACOUSTO-OPTIC DETECTOR WITH OPTO-MECHANICAL COUPLING

(30) Priorité: 19.02.2018 FR 1851405
(43) Date de publication de la demande: 21.08.2019
(73) Titulaire: Commissariat à l'énergie atomique et aux énergies alternatives, 75015 Paris (FR)
(72) Inventeur: DURAFFOURG, Laurent, 38000 GRENOBLE (FR); LABEYE, Pierre, 38000 GRENOBLE (FR); TAUREL, Boris, 38000 GRENOBLE (FR)
(74) Mandataire: Brevalex

(56) Documents cités:
- EP-A1- 2 543 987
- US-A- 5 559 358
- US-B2- 7 245 380
- CHURENKOV ET AL: "Photothermal excitation and self-excitation of silicon microresonators", SENSORS AND ACTUATORS A: PHYSICAL, ELSEVIER BV, NL, vol. 39, no. 2, 1 novembre 1993 (1993-11-01), pages 141-148, XP026482353, ISSN: 0924-4247, DOI: 10.1016/0924-4247(93)80211-X [extrait le 1993-11-01]
- M. HOSSEIN-ZADEH ET AL: "An Optomechanical Oscillator on a Silicon Chip", IEEE JOURNAL OF SELECTED TOPICS IN QUANTUM ELECTRONICS., vol. 16, no. 1, 1 janvier 2010 (2010-01-01), pages 276-287, XP055485590, US ISSN: 1077-260X, DOI: 10.1109/JSTQE.2009.2031066

## Description

### DOMAINE TECHNIQUE

L'invention concerne un capteur photo-acoustique, basé sur la génération d'une onde acoustique induite par l'absorption d'une impulsion lumineuse par un milieu gazeux, voire liquide.

### ÉTAT DE LA TECHNIQUE ANTÉRIEURE

On connaît dans l'art antérieur des capteurs photo-acoustiques comportant :
- une chambre de mesure, recevant un mélange gazeux à analyser; et
- une source lumineuse, envoyant des impulsions laser dans la chambre de mesure.

La longueur d'onde des impulsions laser correspond à une longueur d'onde d'absorption, caractéristique d'un gaz dont on souhaite mesurer la concentration dans la chambre de mesure. En présence de ce gaz dans la chambre de mesure, chaque impulsion laser est en partie absorbée, ce qui génère un échauffement local dans la chambre de mesure. Cet échauffement local génère à son tour une onde de pression dans la chambre de mesure, nommée onde acoustique. Cet effet est nommé effet photo-acoustique. L'onde de pression est mesurée à l'aide d'un microphone placé dans la chambre de mesure.

Un tel capteur est décrit par exemple dans l'article de J. Rouxel & al., « Miniaturized differential Helmholtz resonators for photoacoustic trace gas detection », Sensors and Actuators B, pp. 1104-1110.

Dans cet article, les auteurs proposent plus particulièrement un montage comportant deux chambres de mesure similaires, reliées entre elles par deux conduits parallèles. Une seule des chambres reçoit les impulsions laser, mais chacune est équipée d'un microphone. On peut ainsi réaliser une mesure différentielle de l'onde acoustique.

La plus petite concentration en gaz pouvant être détectée par le capteur photo-acoustique définit la limite de détection du capteur.

Cette valeur est limitée en particulier par le rapport signal à bruit du microphone.

Différentes solutions ont donc été proposées, pour s'affranchir du microphone.

Il est connu, par exemple, d'utiliser plutôt un diapason en quartz dont les deux bras encadrent le point de focalisation des impulsions laser dans la chambre de mesure. Cette solution est mentionnée dans l'article cité ci-dessus. L'amélioration sur la limite de détection reste cependant limitée car les diapasons utilisés ont des fréquences de résonance élevées comparées à la fréquence maximale pour laquelle les molécules de gaz absorbent la puissance optique sans saturation (cette fréquence est fixée par le temps de relaxation caractéristique des molécules, typiquement inférieur à 30 µs, soit 30 kHz de bande passante maximale).

Il est connu également de réaliser une mesure de type optique, à l'aide d'une poutre placée dans la chambre de mesure, et mise en oscillation par l'onde acoustique. Le mouvement de la poutre est mesuré à l'aide d'un faisceau laser qui se réfléchit sur cette dernière. Un tel capteur est décrit par exemple dans l'article de Toni Laurila & al., « Diode laser-based photoacoustic spectroscopy with interferometrically-enhanced cantilever detection », Optics Express, Vol. 13, No. 7, pp 2453-2458. Cette solution permet de réduire la limite de détection du capteur, mais offre une faible résolution.

Un elément d'un capteur photo-acoustique selon le préambule de la revendication 1 est connu du document EP 2 543 987 A1.

Un objectif de la présente invention est de proposer un capteur photo-acoustique, offrant une forte réduction de la limite de détection, en comparaison avec les capteurs de l'art antérieur basés sur l'utilisation d'un microphone, sans perte en résolution.

### EXPOSÉ DE L'INVENTION

Cet objectif est atteint avec un capteur photo-acoustique comportant :
- une chambre de mesure, apte à recevoir un milieu gazeux ou liquide ; et
- une source d'émission d'un faisceau lumineux d'excitation modulé en amplitude à une fréquence dite d'excitation ;
le capteur photo-acoustique étant agencé pour que le faisceau lumineux d'excitation se propage dans la chambre de mesure, et le faisceau lumineux d'excitation présentant une composante spectrale apte à générer une onde de pression dans la chambre de mesure en présence d'une caractéristique prédéterminée du milieu gazeux ou liquide, l'onde de pression étant nommée onde acoustique.

Selon l'invention, le capteur photo-acoustique comprend en outre :
- un résonateur optique, situé dans la chambre de mesure, et comprenant au moins un élément mécanique qui est monté mobile et/ou déformable autour d'une position de retour élastique ou d'une forme de retour élastique ; et
- une source d'émission d'un faisceau lumineux de mesure, distincte ou confondue avec la source d'émission du faisceau lumineux d'excitation ;
le capteur photo-acoustique étant agencé pour que le faisceau lumineux de mesure effectue plusieurs passages dans le résonateur optique en passant par l'élément mécanique mobile et/ou déformable, et l'élément mécanique mobile et/ou déformable étant apte à être mis en oscillation à la fois par un signal optique confiné dans le résonateur optique et par une onde acoustique générée dans la chambre de mesure.

Le faisceau lumineux de mesure, en sortie du résonateur optique, présente alors des propriétés optiques qui sont fonction des oscillations de l'élément mécanique mobile et/ou déformable.

Comme dans l'art antérieur, la détection repose sur la génération d'une onde acoustique dans la chambre de mesure, par effet photo-acoustique, et à l'aide du faisceau lumineux d'excitation.

Le faisceau lumineux d'excitation présente une composante spectrale à une longueur d'onde d'absorption, absorbée par le milieu gazeux ou liquide en présence d'une caractéristique prédéterminée de ce dernier. Ladite caractéristique prédéterminée peut être la présence d'un gaz prédéterminé, ou la présence d'une famille de gaz prédéterminée.

Le résonateur optique forme un dispositif optique dans lequel des rayons lumineux sont susceptibles de rester confinés. Le confinement de l'énergie lumineuse dans le résonateur optique est fonction de sa longueur d'onde, relativement à des pics de résonance du résonateur optique. Les pics de résonance sont centrés chacun sur une longueur d'onde de résonance, pour laquelle le déphasage apporté par un tour dans le résonateur est un multiple de 2*π*. Le résonateur optique est par exemple un macro-résonateur, de type cavité linéaire, ou un micro-résonateur, de type anneau résonant.

Selon l'invention, le résonateur optique comporte un élément mécanique, monté mobile et/ou déformable autour d'une position de retour élastique ou d'une forme de retour élastique. En d'autres termes, l'élément mécanique est apte à se déplacer et/ou se déformer sous l'effet d'une force de pression, et à revenir à sa position, respectivement sa forme initiale, lorsque ladite force de pression n'est plus exercée. Ladite position, respectivement forme initiale, est nommée position, respectivement forme de retour élastique.

L'élément mécanique mobile et/ou déformable est apte à être mis en oscillation mécanique, sous l'effet de la pression de radiation exercée par un signal optique confiné dans le résonateur optique. L'élément mécanique, situé initialement à une position où la pression de radiation est élevée, est légèrement déplacé ou déformé sous l'effet de cette pression. Ce déplacement ou cette déformation réduit la pression de radiation qui s'exerce sur l'élément mécanique, qui revient alors à sa position initiale ou à sa forme initiale, et ainsi de suite. Ce phénomène d'oscillation mécanique est nommé « auto-oscillation ». L'élément mécanique mobile et/ou déformable forme ainsi un résonateur opto-mécanique.

Le signal optique générant l'auto-oscillation peut être constitué par le faisceau lumineux de mesure, ou par un faisceau lumineux annexe nommé faisceau de pompe.

La fréquence de l'auto-oscillation est définie par des caractéristiques mécaniques du résonateur optique, lorsque le signal optique exerçant la pression de radiation est un signal continu. En variante, la fréquence de l'auto-oscillation peut correspondre à la fréquence d'une modulation d'amplitude du signal optique exerçant la pression de radiation. En tout état de cause, la fréquence de l'auto-oscillation est généralement supérieure ou égale à 100 kHz, et comprise de préférence entre 100 kHz et 1 GHz, bornes incluses.

L'élément mécanique mobile et/ou déformable est également apte à être mis en oscillation mécanique par l'onde acoustique générée dans la chambre de mesure. La fréquence de l'onde acoustique est égale à la fréquence du faisceau lumineux d'excitation, laquelle n'excède pas quelques dizaines de kHz pour que l'effet photo-acoustique soit efficace. Ainsi, l'oscillation liée à l'effet photo-acoustique forme un signal basse fréquence (modulation d'amplitude basse fréquence), relativement à l'auto-oscillation (haute fréquence).

En fonctionnement, une onde acoustique est générée dans la chambre de mesure, par effet photo-acoustique. Cette onde acoustique exerce une force de pression sur l'élément mécanique mobile et/ou déformable, mis en auto-oscillation par un signal optique confiné dans le résonateur optique.

L'élément mécanique mobile et/ou déformable est donc sollicité mécaniquement à la fois par l'onde acoustique, et par la pression de radiation du signal optique confiné dans le résonateur optique. Il se déplace selon un mouvement d'oscillation combinant les effets respectifs de ces deux sollicitations.

Ce mouvement se traduit, sur le faisceau lumineux de mesure émergeant du résonateur optique après y avoir effectué plusieurs passages, par une variation de l'intensité en fonction du temps. Le faisceau lumineux de mesure émergeant du résonateur optique comporte ainsi une composante haute fréquence liée à l'auto-oscillation et une composante basse fréquence liée à l'onde acoustique. On peut considérer que l'auto-oscillation (liée à une force optique, ici la pression de radiation) fournit une porteuse pour l'oscillation liée à l'onde acoustique.

La composante basse fréquence donne une information sur l'amplitude de l'onde acoustique, qui dépend de la mesure dans laquelle on trouve la caractéristique prédéterminée dans la chambre de mesure (concentration en un gaz prédéterminé, par exemple). Cette information est contenue notamment dans l'amplitude crête à crête de la composante basse fréquence, et dans une différence de phase avec le faisceau lumineux de mesure en entrée du résonateur optique.

La composante haute fréquence donne accès à des rapports signal sur bruit bien meilleurs que dans l'art antérieur.

Le capteur photo-acoustique selon l'invention est donc basé sur une détection de type optique, sans microphone. Il permet une forte réduction de la limite de détection, en comparaison avec les capteurs de l'art antérieur, et sans affecter la résolution de la mesure. Au contraire, l'invention offre également des résolutions de mesure supérieures à celles de l'art antérieur.

Selon l'invention, l'information pertinente se trouve notamment dans une différence de phase. On peut ainsi réaliser une mesure de concentration en gaz sur une phase, ce qui donne accès à des résolutions encore améliorées.

L'invention offre également des capacités de miniaturisation augmentées, en comparaison avec l'art antérieur.

On remarque que le faisceau lumineux de mesure présente une fonction de sonde, pour traduire en temps réel une position de l'élément mécanique mobile et/ou déformable en une valeur d'amplitude. Le cas échéant, il peut présenter en outre une fonction de pompe, pour exercer une pression de radiation sur l'élément mécanique mobile et/ou déformable, et générer ainsi le mouvement d'auto-oscillation décrit ci-dessus.

Dans tout le texte, on nomme « capteur photo-acoustique » un dispositif qui ne comporte pas les éléments permettant de réaliser une mesure sur le faisceau lumineux de mesure émergeant du résonateur optique, et qui ne comporte pas non plus de calculateur pour convertir une mesure réalisée sur le faisceau lumineux de mesure émergeant du résonateur optique en une information relative au milieu gazeux ou liquide dans la chambre de mesure, par exemple une concentration d'une espèce chimique prédéterminée. De manière plus rigoureuse, on parle donc plutôt, dans les revendications, d'un « élément d'un capteur photo-acoustique ».

De préférence, l'élément mécanique mobile et/ou déformable est apte à être mis en oscillation par un signal optique confiné dans le résonateur optique, à une fréquence d'auto-oscillation mécanique du résonateur optique, et la fréquence d'excitation du faisceau lumineux d'excitation est au moins dix fois inférieure à la fréquence d'auto-oscillation mécanique du résonateur optique.

Selon un mode de réalisation avantageux, le faisceau lumineux de mesure présente un pic d'émission centré sur une longueur d'onde de mesure, la longueur d'onde de mesure étant située sur un pic de résonance du résonateur optique au repos, le résonateur optique étant dit au repos en l'absence de l'onde acoustique dans la chambre de mesure et en l'absence d'un signal optique confiné dans le résonateur optique.

La longueur d'onde de mesure peut correspondre au maximum dudit pic de résonance.

En variante, la longueur d'onde de mesure peut être située sur une pente dudit pic de résonance.

En variante, le faisceau lumineux de mesure présente un pic d'émission centré sur une longueur d'onde de mesure, la longueur d'onde de mesure étant située sur un pic de résonance du résonateur optique à l'équilibre, le résonateur optique étant dit à l'équilibre lorsqu'il se trouve à mi-chemin entre ses deux positions extrêmes durant son mouvement d'oscillation, en l'absence de l'onde acoustique dans la chambre de mesure. La longueur d'onde de mesure peut correspondre au maximum dudit pic de résonance. En variante, la longueur d'onde de mesure peut être située sur une pente dudit pic de résonance.

Avantageusement, le capteur photo-acoustique présente en outre une source d'émission d'un faisceau de pompe, le faisceau de pompe présentant un pic d'émission centré sur une longueur d'onde correspondant au maximum d'un pic de résonance du résonateur optique au repos.

En variante, le capteur photo-acoustique présente en outre une source d'émission d'un faisceau de pompe, le faisceau de pompe présentant un pic d'émission centré sur une longueur d'onde correspondant au maximum d'un pic de résonance du résonateur optique à l'équilibre, le résonateur optique étant dit à l'équilibre lorsqu'il se trouve à mi-chemin entre ses deux positions extrêmes durant son mouvement d'oscillation, en l'absence de l'onde acoustique dans la chambre de mesure.

En tout état de cause, les pics de résonance du résonateur optique à l'équilibre et les pics de résonance du résonateur optique au repos sont sensiblement superposés, de sorte que les différentes variantes énoncées ci-dessus sont quasiment équivalentes deux à deux.

De manière avantageuse :
- la source d'émission du faisceau lumineux de mesure est distincte de la source d'émission du faisceau lumineux d'excitation ;
- le faisceau lumineux de mesure présente un spectre d'émission situé sur le spectre du visible, entre 400 nm et 800 nm ; et
- le faisceau lumineux d'excitation présente un spectre d'émission situé en dehors du spectre visible.

Le résonateur optique peut être un micro-résonateur, agencé suspendu à l'intérieur de la chambre de mesure, avec l'élément mécanique mobile et/ou déformable formé par le résonateur optique lui-même.

Le micro-résonateur peut être apte à guider un faisceau lumineux selon un chemin optique en boucle fermée, avec un trajet optique du faisceau lumineux d'excitation dans la chambre de mesure passant à l'intérieur de ladite boucle fermée.

En variante, le résonateur optique peut être une cavité linéaire délimitée par deux miroirs.

L'un des miroirs peut être agencé mobile et/ou déformable, et former l'élément mécanique mobile et/ou déformable du résonateur optique.

Un chemin optique du faisceau lumineux d'excitation dans la chambre de mesure peut s'étendre sensiblement orthogonal relativement à un chemin optique du faisceau lumineux de mesure dans le résonateur optique, à plus ou moins 10° près.

En variante, un chemin optique du faisceau lumineux d'excitation dans la chambre de mesure peut s'étendre parallèle relativement à un chemin optique du faisceau lumineux de mesure dans le résonateur optique, à plus ou moins 10° près.

Selon un mode de réalisation avantageux, les miroirs de la cavité linéaire délimitent également la chambre de mesure, et le résonateur optique comporte en outre une membrane mobile et/ou déformable située à l'intérieur de la cavité linéaire, et formant l'élément mécanique mobile et/ou déformable du résonateur optique.

L'invention concerne également un système comportant un capteur photo-acoustique selon l'invention et un interféromètre dont l'un des bras comporte le résonateur optique du capteur photo-acoustique.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1 illustre de manière schématique un premier mode de réalisation d'un capteur photo-acoustique selon l'invention ;
- les figures 2A et 2B illustrent le lien, dans le capteur de la figure 1, entre la position du miroir déplaçable et la longueur d'onde de résonance du résonateur optique :
- les figures 3A et 3B, respectivement 4A et 4B, illustrent de manière schématique la résonance du résonateur optique et le faisceau lumineux de mesure en sortie du résonateur optique, en l'absence, respectivement en présence, d'une onde acoustique dans la chambre de mesure ;
- la figure 5 illustre un détail d'un faisceau lumineux de mesure, en sortie du résonateur optique ;
- la figure 6 illustre de manière schématique un positionnement de la longueur d'onde du faisceau lumineux de mesure relativement à un pic de résonance du résonateur optique ;
- la figure 7 illustre de manière schématique une variante du capteur photo-acoustique de la figure 1 ;
- les figures 8 à 10 illustrent respectivement un deuxième, troisième et quatrième modes de réalisation d'un capteur photo-acoustique selon l'invention ; et
- les figures 11A et 11B illustrent de manière schématique deux systèmes comportant un capteur photo-acoustique selon l'invention et des moyens pour réaliser une mesure sur le faisceau lumineux de mesure émergeant du résonateur optique.

### EXPOSÉ DÉTAILLÉ DE MODES DE RÉALISATION PARTICULIERS

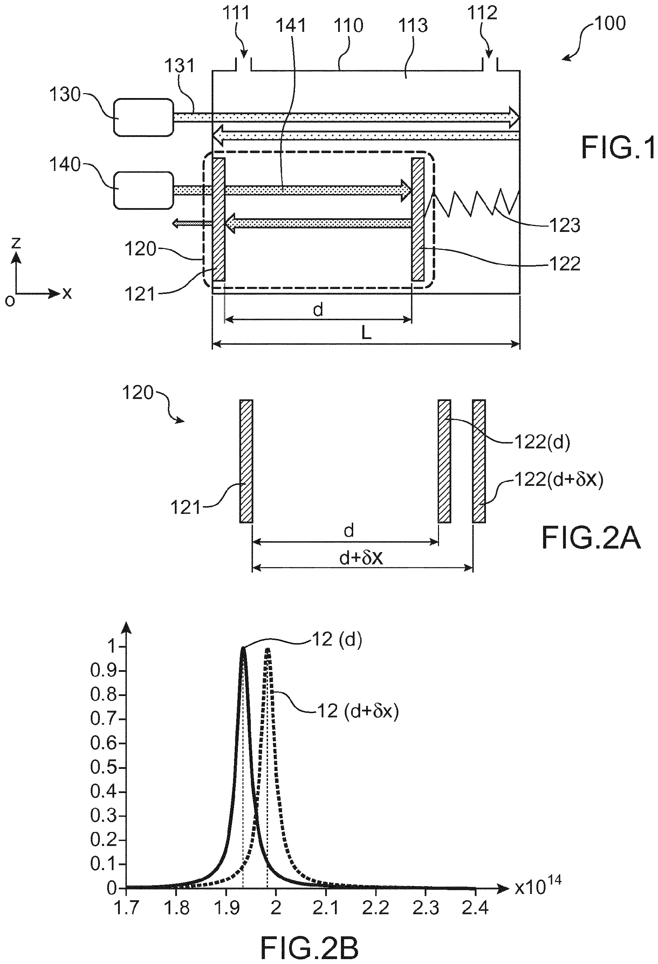

On illustre, en référence à la figure 1, un premier mode de réalisation d'un capteur photo-acoustique 100 selon l'invention.

Le capteur photo-acoustique 100 comporte :
- une chambre de mesure 110 ;
- un résonateur optique 120 (ici une cavité optique) ;
- une source 130 d'émission d'un faisceau lumineux d'excitation, pour réaliser une excitation photo-acoustique ; et
- une source 140 d'émission d'un faisceau lumineux de mesure, pour réaliser une mesure de concentration d'un gaz dans la chambre de mesure ainsi que, dans le cas présent, pour mettre en auto-oscillation le résonateur optique 120.

La chambre de mesure 110, ou cavité acoustique, se présente sous la forme d'une enceinte 113 présentant une ouverture d'entrée 111 et une ouverture de sortie 112, pour l'entrée, respectivement la sortie, d'un milieu gazeux dans, respectivement hors de, la chambre de mesure 110. L'intérieur de la chambre de mesure 110 présente ici, mais de manière non limitative, une forme cylindrique de longueur L (dimension selon l'axe (Ox) de la génératrice du cylindre).

En fonctionnement, la chambre de mesure 110 est remplie d'un milieu gazeux dont on souhaite déterminer une caractéristique. Dans la suite, ladite caractéristique est une concentration d'un gaz prédéterminé.

La source 130 d'émission d'un faisceau lumineux d'excitation émet à une longueur d'onde d'absorption par ledit gaz prédéterminé. Elle émet de préférence dans le moyen infra-rouge, à une longueur d'onde comprise entre 1 µm et 15 µm, et plus particulièrement entre 3 µm et 12 µm (infrarouge moyen : Mid-IR en anglais). Cette gamme de longueurs d'onde regroupe les longueurs d'onde utiles pour identifier de nombreux composés gazeux, notamment les alcanes, les composés organiques volatiles, les oxydes de soufre ou d'azote, etc. La source 130 émet par exemple à 4,26 µm, pour détecter une concentration en gaz dioxyde de carbone.

En variante, la source 130 d'émission d'un faisceau lumineux d'excitation émet à une longueur d'onde située dans l'ultra-violet, par exemple pour détecter l'ozone (à 254 nm).

La source 130 peut être constituée d'un laser, notamment un laser à cascade quantique (QCL pour quantum cascade laser) à rétroaction répartie (DFB pour l'anglais Distributed FeedBack laser), soit un DFB-QCL.

La source 130 émet un signal de type impulsionnel, les impulsions étant réparties selon une fréquence régulière notée *f*₁.

Le faisceau lumineux d'excitation 131, émis par la source 130, se propage en espace libre dans la chambre de mesure 110, à l'intérieur de la chambre de mesure 110. Il peut être amené jusqu'à la chambre de mesure 110 par une fibre optique, notamment une fibre à gradient d'indice, ou une fibre en calchogénure pour le Mid-IR.

En présence du gaz prédéterminé dans la chambre de mesure 110, le faisceau lumineux d'excitation 131 est partiellement absorbé, et génère un échauffement local, lequel génère à son tour une onde acoustique dans la chambre de mesure 110. L'onde acoustique est modulée en amplitude, à la même fréquence *f*₁ que le faisceau lumineux d'excitation 131.

Le faisceau lumineux d'excitation 131 se propage dans la chambre de mesure 110 selon un axe parallèle à l'axe (Ox), où (Ox) est l'axe de la génératrice du cylindre définissant la forme de l'intérieur de la chambre de mesure 110. De préférence, la fréquence *f*₁ correspond à une fréquence de résonance acoustique de la chambre de mesure 110

La fréquence *f*₁ ne doit pas excéder 30 kHz environ, pour que l'effet photo-acoustique soit efficace. De préférence, *f*₁ est inférieure ou égale à 10 kHz.

Le capteur peut comprendre des moyens de focalisation, non représentés, pour focaliser le faisceau lumineux d'excitation 131 dans la chambre de mesure 110.

Le résonateur optique 120 est situé à l'intérieur de la chambre de mesure 110, dans la chambre de mesure 110.

Il est constitué ici d'une cavité linéaire, de type Fabry-Pérot, formée de deux miroirs 121 et 122 disposés face à face et espacés d'une distance d. De préférence, le facteur de qualité de la cavité optique est très grand, supérieur ou égal à 10⁴, grâce à des miroirs de grande qualité (réflectivité supérieure ou égale à 99% par exemple).

La source 140 d'émission d'un faisceau lumineux de mesure émet un faisceau monochromatique, nommé faisceau lumineux de mesure 141, centré sur une longueur d'onde de résonance du résonateur optique 120.

De préférence, la source 140 d'émission d'un faisceau lumineux de mesure émet à une longueur d'onde comprise entre 400 nm et 800 nm, c'est-à-dire à dans le spectre visible, à des longueurs d'onde pour lesquelles il existe des photo-détecteurs présentant d'excellentes performances notamment en termes de rapport signal sur bruit. La source 140 peut être constituée d'un laser émettant dans le visible.

Le faisceau lumineux de mesure 141, émis par la source 140, se propage en espace libre dans le résonateur optique 120, situé lui-même à l'intérieur de la chambre de mesure 110. De préférence, le faisceau lumineux de mesure 141 est amené jusqu'à la chambre de mesure 110 par une fibre optique, notamment une fibre à gradient d'indice.

Ici, le trajet optique du faisceau lumineux de mesure 141 dans le résonateur 120, s'étend parallèle au trajet optique du faisceau lumineux d'excitation 131 dans la chambre de mesure 110.

Le miroir 121 s'étend ici directement sur une face interne de la chambre de mesure 110. Il peut être constitué d'un simple revêtement réfléchissant sur une face interne de ladite chambre de mesure 110.

Le miroir 122 s'étend ici à l'intérieur de la chambre de mesure 110, monté suspendu à l'intérieur de la chambre de mesure 110 et à distance du miroir 121.

Selon l'invention, le résonateur optique 120 comporte un élément mécanique, mobile et/ou déformable, apte à se déplacer en translation et/ou se déformer sous l'effet d'une force de pression, et à revenir à sa position ou sa forme initiale lorsqu'il n'est plus soumis à ladite force de pression. Ici, cet élément mécanique, mobile et/ou déformable est constitué par le miroir 122.

A la figure 1, on a représenté un simple ressort 123, pour illustrer le montage à retour élastique du miroir 122.

Le miroir 122 est constitué par exemple d'une membrane souple en nitrure de silicium, recouverte d'un revêtement réfléchissant. La membrane est agencée suspendue à l'intérieur de la chambre de mesure 110, montée tendue autour d'un support, par exemple un support en silicium. La membrane peut ainsi osciller autour d'une position de repos, à l'image d'un tambour. Dans la suite, elle est donc nommée « membrane oscillante ». La membrane oscillante se comporte comme un élément mécanique dont la masse vibrante est attachée à un ressort. La surface de la membrane oscillante est comprise entre 100^{∗}100 µm² et quelques mm². Son épaisseur est comprise entre quelques dizaines de nanomètres et quelques micromètres.

Afin de mieux comprendre la suite, on a illustré, en figures 2A et 2B, le lien entre la position du miroir 122 et la position des pics de résonance du résonateur optique 120

La figure 2A illustre le résonateur optique 120, pour deux positions du miroir 122, respectivement à une distance *d* et à une distance *d* + *δx* du miroir 121. Les deux positions du miroir 122 sont notées respectivement 122(*d*) et 122(*d* + *δx*)*.*

La figure 2B illustre la position spectrale de la résonance du résonateur optique 120, formé ici par une cavité résonante, lorsque le miroir 122 est situé à une distance *d* du miroir 121, respectivement *d* + *δx.* L'axe des abscisses est une fréquence, la longueur d'onde et la fréquence étant liées par la célérité de la lumière dans le vide. L'axe des ordonnées est une fonction de transfert, sans unité, correspondant à une densité d'énergie réfléchie ou transmise par la cavité résonante, et normalisée à l'unité au maximum de la réflexion ou de la transmission. La résonance se traduit par un pic, nommé pic de résonance, sur la fonction de transfert de la cavité résonante en fonction de la fréquence. On voit à la figure 2B que la position spectrale de la résonance dépend de la position du miroir 122. Les deux positions du pic de résonance sont notées respectivement 12(*d*) et 12(*d* + *δx*).

On remarque ici que la longueur d'onde de résonance, sur laquelle est centré le faisceau lumineux de mesure 141, est plus particulièrement une longueur d'onde de résonance du résonateur optique 120 au repos. Le résonateur optique 120 est dit au repos, en l'absence d'une onde acoustique générée dans la chambre de mesure 110, et en l'absence d'un signal optique confiné dans le résonateur optique 120.

En fonctionnement, le faisceau lumineux de mesure 141 est confiné dans le résonateur optique 120 et exerce sur le miroir 122 une pression de radiation. Cette pression de radiation déplace légèrement le miroir 122, ce qui modifie très légèrement la longueur d'onde de résonance du résonateur optique 120. La longueur d'onde du faisceau lumineux de mesure 141 ne correspondant plus exactement à la longueur d'onde de résonance du résonateur optique 120, la pression de radiation exercée sur le miroir 122 diminue, de sorte qu'il retourne à sa position initiale, où il va de nouveau être soumis à une forte pression de radiation. Le miroir 122 réalise ainsi un mouvement d'oscillation mécanique à une fréquence *f*₂, nommé auto-oscillation du résonateur optique 120.

Si le faisceau lumineux de mesure 141 est continu, la fréquence *f*₂ de l'auto-oscillation est fixée par les caractéristiques géométriques du résonateur optique 120. Si le faisceau lumineux de mesure 141 est signal impulsionnel, la fréquence *f*₂ correspond à la fréquence de répétition des impulsions du faisceau 141. La fréquence *f*₂ de l'auto-oscillation est de préférence supérieure à 100 kHz, et même supérieure à 500 kHz, par exemple égale à 1 MHz pour une telle cavité macroscopique. Pour un micro-résonateur (voir plus loin), la fréquence de l'auto-oscillation peut dépasser les 100 MHz jusqu'au GHz.

En fonctionnement, il y a également génération, dans la chambre de mesure 110, d'une onde acoustique oscillant à la fréquence *f*₁. Le résonateur optique 120, et avec lui le miroir 122, sont situés dans ladite chambre de mesure 110. Par conséquent, le miroir 122 est soumis à la force de pression exercée par l'onde acoustique, notée *δp(t)*. Cette force de pression déplace le miroir 122, selon un mouvement d'oscillation à la fréquence *f₁* desdites impulsions acoustiques.

La fréquence *f*₁ de l'oscillation liée à l'effet photo-acoustique est bien inférieure à la fréquence *f*₂ de l'auto-oscillation, avec un rapport supérieur ou égal à 10 entre les deux, et de préférence supérieur ou égal à 50.

L'amplitude du mouvement d'oscillation lié à l'effet photo-acoustique est bien supérieure à celle du mouvement d'auto-oscillation, puisque la force de pression exercée par l'onde acoustique est bien supérieure à la pression de radiation.

En pratique, l'amplitude des déplacements et/ou déformations de l'élément mécanique mobile et/ou déformable, ici le miroir 122, est suffisamment faible pour ne pas influencer l'onde acoustique générée dans la chambre de mesure 110. Cette amplitude est de l'ordre de quelques nanomètres, alors que la longueur d'onde acoustique est de l'ordre du mètre.

Ici, l'amplitude maximale du déplacement du miroir 122 est de l'ordre de quelques nanomètres, soit environ 100 fois plus petite que la longueur du résonateur optique 120.

En fonctionnement, le mouvement d'oscillation lié à l'effet photo-acoustique, lent et de grande amplitude, se combine au mouvement d'auto-oscillation, rapide et de faible amplitude.

En effet, du fait du lien entre la position du miroir 122 et la position des pics de résonance du résonateur optique 120, les mouvements du miroir 122 se traduisent en temps réel par des variations d'intensité sur le faisceau 141 émergeant du résonateur optique 120 après y avoir effectué plusieurs allers et retours.

On peut alors obtenir une information sur l'amplitude du mouvement d'oscillation lié à l'effet photo-acoustique, à partir d'une mesure d'amplitude et/ou de phase sur le faisceau 141 émergeant du résonateur optique 120.

On peut notamment mesurer une variation d'intensité sur le faisceau 141 émergeant du résonateur optique 120, selon qu'il y ait ou non génération d'une onde acoustique.

En complément ou en variante, on peut mesurer une différence de phase entre le faisceau 141 entrant dans le résonateur optique 120 et le faisceau 141 émergeant du résonateur optique 120.

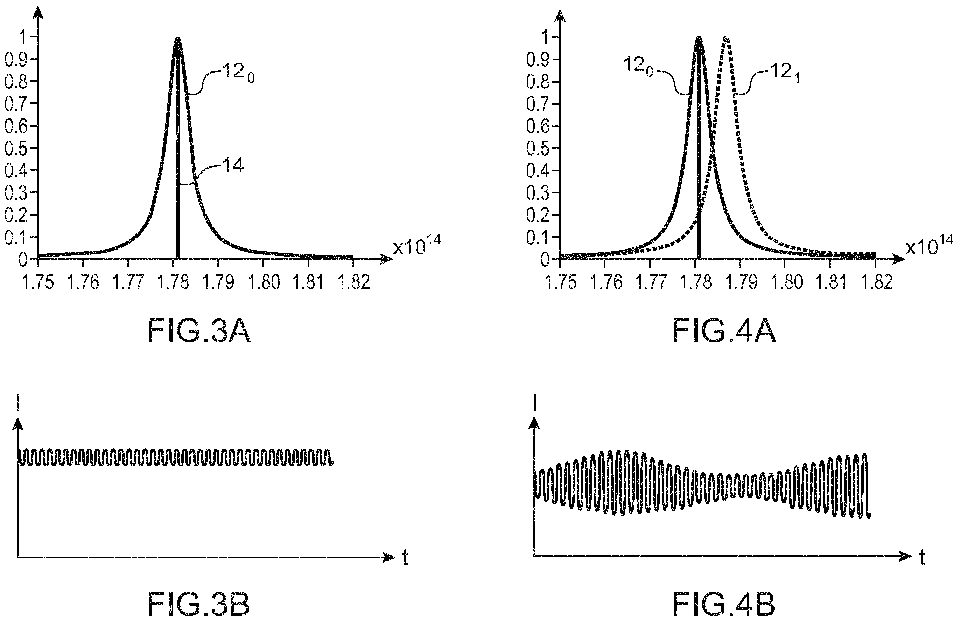

En figure 3A, on a représenté un pic de résonance 12₀ du résonateur optique 120, en l'absence d'onde acoustique dans la chambre de mesure 110. Le trait vertical 14 représente la longueur d'onde centrale du faisceau lumineux de mesure 141, correspondant ici à la longueur d'onde centrale du pic de résonance 12₀. Le trait 14 est large, pour représenter l'amplitude de translation du pic de résonance, associé à l'auto-oscillation.

La figure 3B illustre de façon schématique la variation correspondante de l'intensité *I* du faisceau lumineux de mesure 141, en fonction du temps t. On observe une simple oscillation, de haute fréquence et de faible amplitude.

En figure 4A, on a représenté le même pic de résonance 12₀, en l'absence d'onde acoustique dans la chambre de mesure 110. On a également représenté une position de ce pic, noté alors 12₁, en présence de l'onde acoustique dans la chambre de mesure 110. Les pics de résonance 12₀ et 12₁ correspondent aux deux positions extrêmes du pic de résonance, en présence de l'onde acoustique dans la chambre de mesure 110.

La figure 4B illustre de façon schématique la variation correspondante de l'intensité *I* du faisceau lumineux de mesure 141, en fonction du temps t. On observe schématiquement une composante de basse fréquence et de grande amplitude, modulant une porteuse haute fréquence.

Les propriétés de la composante basse fréquence dépendent notamment de l'amplitude maximale de l'onde acoustique, qui elle-même dépend de la concentration du gaz prédéterminé dans la chambre de mesure 110. Ces propriétés sont notamment l'amplitude crête à crête et le déphasage entrée/sortie tel que défini ci-avant. L'analyse du faisceau lumineux de mesure 141 émergeant du résonateur optique 120 permet donc de retrouver la concentration du gaz prédéterminé dans la chambre de mesure 110.

En pratique, on réalise une mesure sur une fenêtre temporelle réduite relativement à la période de l'onde acoustique. Sur cette fenêtre temporelle, l'amplitude de l'enveloppe du signal mesuré est quasiment constante, ce qui facilite le traitement du signal.

Par exemple, on réalise une mesure sur un intervalle de temps inférieur ou égal à 1/5^{ème} de la période de l'onde acoustique, et même inférieur ou égal à 1/10^{ème} de cette période.

Lorsque le paramètre mesuré est une amplitude, le rapport signal sur bruit associé à la mesure peut être réduit d'un facteur 10 environ, en comparaison avec un capteur de l'art antérieur mesurant simplement un signal réfléchi sur un élément mobile. Cette amélioration est liée au fait que la mesure d'amplitude est réalisée *in fine* sur un signal haute fréquence.

Lorsque le paramètre mesuré est un déphasage, le rapport signal sur bruit associé à la mesure peut être réduit d'un facteur 100, en comparaison avec le même capteur de l'art antérieur. Cette amélioration est liée à la mise en œuvre d'une mesure de type fréquentiel sur un signal haute fréquence. On peut notamment atteindre la limite du bruit brownien du miroir 122, c'est-à-dire une limite absolue du bruit.

En outre, et de façon connue, une vibration dans un résonateur optique peut être détectée jusqu'à une amplitude de vibration bien inférieure à 10⁻¹²m, pouvant même atteindre 10⁻¹⁶m. Cela se traduit, dans le capteur selon l'invention, par une résolution de mesure de trois à quatre ordres de grandeurs inférieure à celles qui sont atteintes lorsqu'on utilise un microphone du commerce pour mesurer l'onde acoustique.

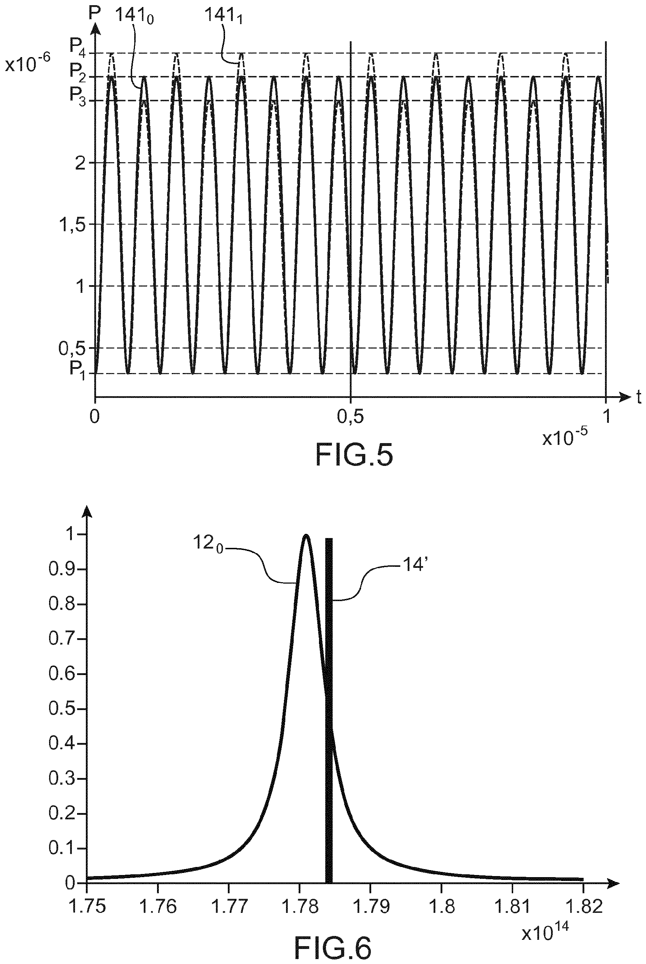

La figure 5 illustre la puissance *P* du faisceau lumineux de mesure émergeant du résonateur optique 120, en fonction du temps *t,* en l'absence, respectivement en présence, d'une onde acoustique dans la chambre de mesure (signal 141₀, respectivement 141₁). L'axe des abscisses est gradué en secondes. L'axe des ordonnées est gradué en Watts. La fenêtre temporelle considérée est de 10 µs, pour une période acoustique de 100 µs.

Le signal 141₀ oscille entre une puissance P₁ et une puissance P₂, à une fréquence égale au double de la fréquence *f*₂ de l'auto-oscillation.

Le signal 141₁ présente ici une composante à une fréquence fondamentale (égale au double de la fréquence *f*₂ de l'auto-oscillation) et une composante à une première harmonique (à une fréquence égale à la fréquence *f*₂ de l'auto-oscillation). Il est constitué d'impulsions réparties à la fréquence *f*₂ de l'auto-oscillation, oscillant entre une puissance minimale P₁ et une puissance maximale prenant alternativement la valeur P₃ ou P₄.

Les inventeurs ont montré que la puissance de la fréquence fondamentale varie de façon linéaire croissante avec la force de pression exercée par l'onde acoustique. De même, la puissance de la première harmonique varie de façon décroissante et quasi-linéaire avec la pression exercée par l'onde acoustique. Les variations de puissance, de l'ordre de quelques µW, sont compatibles avec les résolutions des photo-détecteurs du commerce.

La figure 6 illustre une variante dans laquelle le faisceau lumineux de mesure est centré sur une longueur d'onde située sur une pente d'un pic de résonance 12₀ du résonateur optique 120 au repos, à distance du maximum d'amplitude de ce pic. Le trait vertical 14' représente la longueur d'onde centrale du faisceau lumineux de mesure 141. Le trait 14' est large, pour représenter l'amplitude de translation du pic de résonance, associé à l'auto-oscillation.

Cette variante permet notamment d'amplifier la variation d'amplitude associée à l'auto-oscillation, sur le faisceau lumineux de mesure 141 émergeant du résonateur optique.

Elle permet également de s'assurer de la linéarité de la relation entre le déplacement et/ou la déformation de l'élément mécanique mobile et/ou déformable, et l'intensité du faisceau lumineux de mesure émergeant du résonateur optique. On limite ainsi l'apparition d'harmoniques à des fréquences différentes de *f*₂.

Le faisceau lumineux de mesure 141, bien que centré sur une longueur d'onde distincte d'une longueur d'onde de résonance du résonateur optique 120, peut néanmoins exercer une pression de radiation suffisante pour générer le mouvement d'auto-oscillation décrit ci-avant.

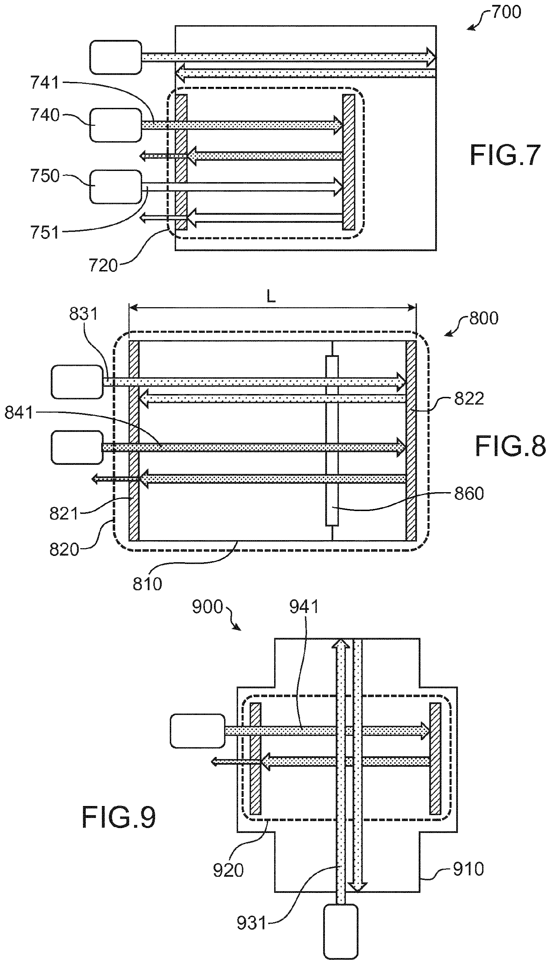

En variante, on utilise un troisième faisceau monochromatique, centré exactement sur une longueur d'onde de résonance du résonateur optique 120, et distinct du faisceau lumineux de mesure 141, pour exercer la pression de radiation générant l'auto-oscillation. La figure 7 illustre un capteur photo-acoustique 700 selon cette variante.

Le capteur photo-acoustique 700 ne sera décrit que pour ses différences relativement au capteur photo-acoustique de la figure 1. Le capteur 700 comporte en particulier :
- une source 740 d'émission d'un faisceau lumineux d'excitation 741, telle que décrite ci-avant ; et
- une source 750 d'émission d'un faisceau lumineux nommé faisceau de pompe 751.

Le faisceau lumineux d'excitation 741 est un faisceau monochromatique centré sur la pente de l'un des pics de résonance du résonateur optique 720.

Le faisceau de pompe 751 est un faisceau monochromatique centré sur le maximum de l'un des pics de résonance du résonateur optique 720.

De préférence, les longueurs d'onde centrales respectives du faisceau lumineux d'excitation 741 et du faisceau de pompe 751 sont situées sur deux pics de résonance différents du résonateur optique 720.

La source 750 d'émission d'un faisceau de pompe peut être constituée d'un laser.

La figure 8 illustre un deuxième mode de réalisation d'un capteur photo-acoustique 800 selon l'invention. Ce mode de réalisation ne sera décrit que pour ses différences relativement au mode de réalisation de la figure 1.

Ici, le résonateur optique 820 est une cavité résonante linéaire, qui s'étend sur toute la longueur L du volume interne de la chambre de mesure 810. Les deux miroirs 821, 822 délimitant la cavité linéaire peuvent être constitués chacun de simples revêtements réfléchissants déposés sur deux faces internes opposées de la chambre de mesure 810.

Ici, l'élément mécanique mobile et/ou déformable est constitué d'une membrane souple 860, située entre les deux miroirs 821 et 822. La membrane souple 860 est par exemple en nitrure de silicium, montée tendue autour d'un support, comme décrit ci-avant à propos du miroir 122 et de la figure 1. Dans la suite, la membrane souple 860 est nommée « membrane oscillante ». La membrane oscillante 860 est transparente à la longueur d'onde du faisceau lumineux d'excitation 831, pour ne pas influencer l'effet photo-acoustique, et quasiment transparente à la longueur d'onde du faisceau lumineux de mesure 841. Le taux de transmission à la longueur d'onde du faisceau lumineux d'excitation 831 est avantageusement supérieur ou égal à 95%, et même supérieur ou égal à 99%. Le taux de transmission à la longueur d'onde du faisceau lumineux de mesure 841 est avantageusement supérieur ou égal à 90% et même supérieur ou égal à 99%.

La membrane oscillante 860 étant quasiment transparente à la longueur d'onde du faisceau lumineux de mesure 841, elle n'est pas ou peu soumise à la pression de radiation exercée par ce dernier.

En fonctionnement, le faisceau lumineux de mesure 841 forme, dans la cavité résonante, une onde stationnaire. L'onde stationnaire est définie par des nœuds, là où sa variation d'amplitude est nulle, et des ventres, là où sa variation d'amplitude est maximale.

Selon ce mode de réalisation, la membrane oscillante 860 est placée sur ou à proximité d'un ventre de cette onde stationnaire. La position des ventres est définie en l'absence d'onde acoustique dans la chambre de mesure 810.

La membrane oscillante est ainsi soumise, en fonctionnement, à une force optique due au gradient de champ électrique de l'onde stationnaire. Cette force optique permet de mettre la membrane oscillante en mouvement, selon un mouvement d'auto-oscillation tel que décrit ci-avant. En d'autres termes, selon ce mode de réalisation, l'auto-oscillation de l'élément mécanique mobile et/ou déformable est générée non pas par une pression de radiation, mais par un champ électromagnétique. Dans ces deux cas, l'auto-oscillation est générée par une force dite optique, exercée par un signal optique confiné dans le résonateur optique.

La membrane oscillante 860 est donc adaptée à être déplacée ou déformée, à la fois :
- selon un mouvement d'oscillation lente, généré par une onde acoustique dans la chambre de mesure 810 ; et
- selon un mouvement d'auto-oscillation rapide, généré ici par le gradient de champ électromagnétique du faisceau lumineux de mesure 841 confiné dans la cavité résonante 820.

Le déplacement et/ou la déformation de la membrane oscillante 860 se retrouvent sur les propriétés optiques du faisceau lumineux de mesure 841. En particulier, l'effet dispersif de la membrane oscillante 860 sur l'onde optique stationnaire dans la cavité résonante 820 dépend de sa position, plus ou moins proche d'un ventre de l'onde stationnaire lorsqu'elle est déplacée ou déformée autour de sa position de repos. Cet effet dispersif va modifier l'indice de réfraction vu par l'onde stationnaire, et donc la longueur effective de la cavité résonante, et ainsi changer la fréquence de résonance optique de cette dernière.

Avantageusement, le résonateur optique 820 est optiquement résonant, à la longueur d'onde du faisceau lumineux d'excitation 831 également. On augmente ainsi l'effet photo-acoustique dans la chambre de mesure 810, en augmentant l'énergie à la longueur d'onde du faisceau lumineux d'excitation confinée dans la chambre de mesure 810

Ce mode de réalisation peut être combiné avec le mode de réalisation de la figure 7. Dans ce cas, c'est un faisceau de pompe, distinct du faisceau lumineux de mesure, qui génère le mouvement d'auto-oscillation. La membrane oscillante 860 est placée à un ventre de l'onde stationnaire issue du faisceau de pompe et formée dans le résonateur optique 820, en fonctionnement. La membrane oscillante 860 est également transparente ou presque à la longueur d'onde du faisceau de pompe.

La figure 9 illustre un troisième mode de réalisation d'un capteur photo-acoustique 900 selon l'invention. Ce mode de réalisation ne sera décrit que pour ses différences relativement au mode de réalisation de la figure 1.

Selon ce mode de réalisation, le capteur photo-acoustique est agencé pour que le chemin optique du faisceau lumineux d'excitation 931 dans la chambre de mesure 910 soit orthogonal au chemin optique du faisceau lumineux de mesure 941 dans le résonateur optique 920.

On peut ainsi décorreler les caractéristiques mécaniques du résonateur optique 920 de celles de la chambre de mesure 910. En particulier, la fréquence de résonance du résonateur optique peut être réglée indépendamment de la longueur de la cavité acoustique formée par la chambre de mesure 910. On peut ainsi optimiser, indépendamment l'un de l'autre, l'effet photo-acoustique et la détection optique.

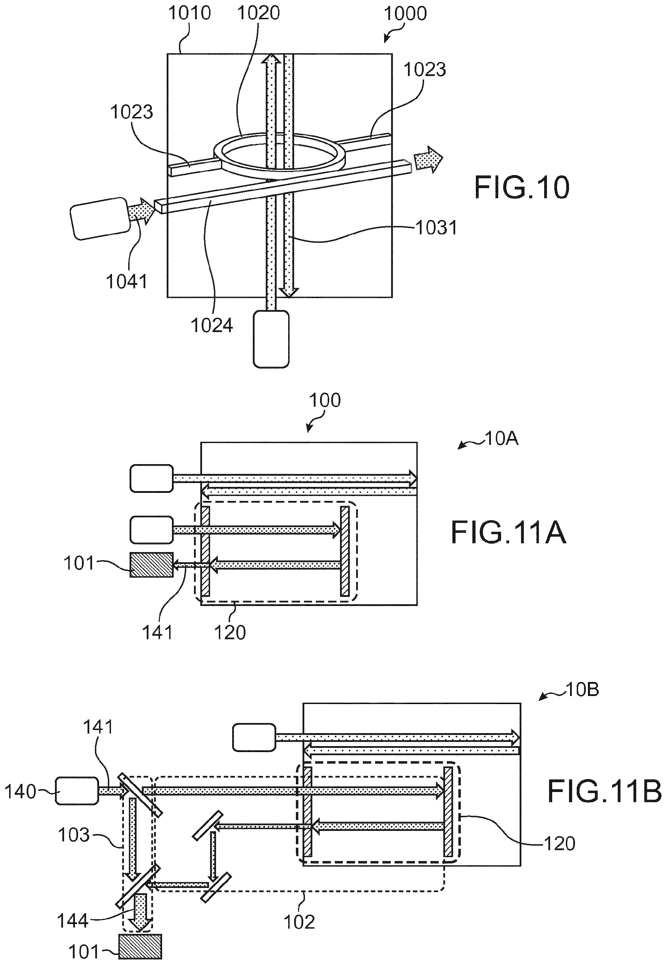

La figure 10 illustre, de manière schématique, un quatrième mode de réalisation d'un capteur photo-acoustique 1000 selon l'invention. Ce mode de réalisation ne sera décrit que pour ses différences relativement au mode de réalisation de la figure 1.

Selon ce mode de réalisation, le résonateur optique comprend un micro-résonateur à guide d'onde, en particulier un micro-résonateur en anneau 1020.

Un micro-résonateur à guide d'onde comporte un guide d'onde replié sur lui-même, voire une série de guides d'onde élémentaires répartis les uns à la suite des autres, guidant la lumière selon un trajet optique en forme de boucle fermée. Lorsque le trajet optique est un cercle, on parle de micro-résonateur en anneau. Les dimensions du micro-résonateur peuvent être inférieures au millimètre. De préférence, le guide d'onde est formé par un guide en semi-conducteur (Si, GaAs...) ou diélectrique (SiN par exemple) d'indice fort et par une gaine d'indice plus faible (oxyde de silicium, air...).

L'anneau 1020 présente un diamètre compris par exemple entre 5 µm et 100 µm, pour une section carrée ou rectangulaire de surface comprise entre 10⁴ nm² et quelques µm².

L'anneau 1020 est agencé suspendu à l'intérieur de la chambre de mesure 1010. Il peut être maintenu suspendu par l'intermédiaire de bras de soutien 1023. De préférence, les bras 1023 sont disposés chacun au niveau d'un nœud de l'onde stationnaire confinée dans l'anneau 1020, en fonctionnement. La position du nœud est définie en l'absence d'onde acoustique générée dans la chambre de mesure. L'onde stationnaire est formée par le faisceau lumineux de mesure, ou, selon une variante non représentée, par un faisceau de pompe.

Grâce à son agencement suspendu, l'anneau 1020 est apte à se déformer radialement selon un mouvement d'extension et contraction radiale, de sorte que son rayon augmente, respectivement diminue. L'anneau se déforme en particulier :
- selon un mouvement rapide de contractions et extensions, généré ici par la pression de radiation exercée par signal optique confiné dans l'anneau, ici le faisceau lumineux de mesure 1041 (auto-oscillation) ; et
- selon un mouvement lent, principalement dans le plan de l'anneau, généré par une onde acoustique dans la chambre de mesure.

L'anneau 1020 constitue ainsi, en outre, l'élément mécanique mobile et/ou déformable selon l'invention.

De préférence, le faisceau lumineux d'excitation 1031 circule dans la chambre de mesure 1010 en passant à l'intérieur de la boucle fermée définie par l'anneau 1020.

Avantageusement, le chemin optique du faisceau lumineux d'excitation 1031 dans la chambre de mesure 1010 est sensiblement orthogonal au plan de l'anneau 1020, par exemple à plus ou moins 10° près.

Le faisceau lumineux de mesure 1041 est amené dans l'anneau 1020, de façon connue en soi, par un guide d'onde linéaire 1024 agencé adjacent à l'anneau 1020. Après plusieurs tours dans l'anneau, le faisceau lumineux de mesure 1041 peut émerger de l'anneau 1020 par le même guide linéaire, comme représenté en figure 10, ou par un second guide d'onde linéaire également adjacent à l'anneau 1020.

En variante, le capteur photo-acoustique comporte en outre une source d'émission d'un faisceau de pompe, pour générer l'auto-oscillation de l'anneau 1020. Le capteur photo-acoustique peut comprendre alors un premier guide d'onde linéaire adjacent à l'anneau, pour l'injection puis l'extraction du faisceau de pompe, et un second guide d'onde linéaire adjacent à l'anneau, pour l'injection puis l'extraction du faisceau lumineux de mesure.

Le capteur photo-acoustique 1000 présente par exemple les caractéristiques suivantes :
- micro-résonateur : anneau de rayon *R* = 50 µ*m* et de section S = 300 * 300 *nm² ;*
- force exercée sur le micro-résonateur par la pression de radiation : quelques pico-Newtons ;
- fréquence de l'auto-oscillation : *f*₂ = 126 *kHz ;*
- fréquence de l'onde acoustique : *f₁* = *2 kHz;*
- facteur de qualité mécanique du résonateur acoustique formé par la chambre de mesure : *Qₘ* = 10 (hypothèse) ;
- longueur d'onde de résonance du micro-résonateur : *λᵣ* = 1,55 µ*m* ;
- intervalle spectral libre du micro-résonateur : *ISL* = 2,3 ∗ 10¹¹ *Hz ;*
- facteur de qualité optique du micro-résonateur : *Qₒₚₜ* = 190000 (hypothèse).

Dans ces conditions, pour une amplitude Δ*p* = 5*mPa* de l'onde de pression générée par effet photo-acoustique, le rayon *R* de l'anneau varie de 1,6^{∗}10⁻¹⁰m.

On peut obtenir ainsi une limite de détection inférieure à 5 µPa pour une durée de mesure de 100 ms. Cela correspond à une limite de détection qui est un ordre de grandeur inférieure à l'état de l'art, pour une durée de mesure qui est un ordre de grandeur inférieure également.

L'anneau 1020, les bras de soutien 1023 et le ou les guide(s) d'onde 1024 peuvent être réalisés en micro-technologie, à l'aide des étapes suivantes :
- gravure d'une couche mince déposée au-dessus d'un substrat en silicium, pour former l'anneau 1020, les bras de soutien 1023 et le ou les guide(s) d'onde 1024 (couche mince en Si, ou SiGe, ou Ge, etc.) ;
- gravure du matériau sous l'anneau 1020, de sorte qu'il se retrouve agencé suspendu.

L'invention n'est pas limitée à un micro-résonateur à guide d'onde dans lequel le guide d'onde est replié en forme d'anneau. Elle couvre également de nombreuses autres variantes dans lesquelles le résonateur optique est un résonateur à guide d'onde, apte à guider un faisceau lumineux selon un chemin optique en boucle fermée, et agencé suspendu à l'intérieur de la chambre de mesure, avec l'élément mécanique mobile et/ou déformable qui est formé par le résonateur optique lui-même. En particulier, le chemin optique peut présenter une forme ovale.

Selon d'autres variantes encore, le micro-résonateur agencé suspendu dans la chambre de mesure comprend plutôt un micro-résonateur à disque, un micro-résonateur en forme de sphère, un micro-résonateur à cristaux photoniques, etc. Là-encore, le micro-résonateur forme également l'élément mécanique mobile et/ou déformable selon l'invention. Tous ces résonateurs sont nommés « micro-résonateurs », car ils présentent chacun un très faible encombrement, avec des dimensions caractéristiques inférieures ou égales au millimètre.

Les figures 11A et 11B illustrent de manière schématique deux systèmes comportant un capteur photo-acoustique selon l'invention et des moyens pour réaliser une mesure sur le faisceau lumineux de mesure émergeant du résonateur optique.

A la figure 11A, le système 10A comporte un capteur photo-acoustique 100 tel qu'illustré en figure 1, et un photo-détecteur 101 agencé pour recevoir le faisceau lumineux de mesure 141 émergeant du résonateur optique 120 après avoir effectué plusieurs allers et retours dans ce dernier.

Le photo-détecteur 101 mesure une intensité lumineuse ou une puissance lumineuse, en fonction du temps, à la longueur d'onde du faisceau lumineux de mesure 141.

A la figure 11B, le système 10B comporte un interféromètre de type Michelson.

Le faisceau lumineux de mesure 141, émis par la source 140, est séparé en deux sous-faisceaux. L'un est dirigé vers un premier bras 102 de l'interféromètre, comportant le résonateur optique 110 du capteur photo-acoustique. L'autre est dirigé vers un second bras 103 de l'interféromètre.

Le sous-faisceau, émergeant du résonateur optique 110 après y avoir effectué plusieurs allers et retours, est ensuite combiné avec le sous-faisceau ayant circulé sur le bras 103 de l'interféromètre. La combinaison de ces deux sous-faisceaux produit un signal d'interférence 144 qui est reçu par un photo-détecteur 101. On peut ainsi suivre, en fonction du temps, la différence entre la phase du faisceau lumineux de mesure entrant dans le résonateur optique 110 et la phase du même faisceau après avoir effectué plusieurs allers et retours dans le résonateur optique.

Ces deux systèmes peuvent comprendre, en outre, des moyens de calcul pour traiter le signal fourni par le photo-détecteur 101 et en déduire une information relative au milieu gazeux ou liquide dans la chambre de mesure. En d'autres termes, l'invention couvre également une installation comportant un capteur photo-acoustique tel que décrit ci-dessus, des éléments pour réaliser une mesure sur le faisceau lumineux de mesure émergeant du résonateur optique (mesure d'une amplitude crête à crête en fonction du temps, ou d'un déphasage entrée-sortie du résonateur optique en fonction du temps), et un calculateur pour convertir une mesure réalisée sur le faisceau lumineux de mesure émergeant du résonateur optique en une information relative au milieu gazeux ou liquide dans la chambre de mesure, par exemple une concentration d'une espèce chimique prédéterminée.

L'invention couvre donc un capteur photo-acoustique combinant un résonateur opto-mécanique et une cavité photo-acoustique.

La cavité photo-acoustique est formée par la chambre de mesure, traversée par un faisceau d'excitation impulsionnel.

Le résonateur opto-mécanique est formé par le résonateur optique, dans lequel un élément mécanique est apte à être mis en oscillations rapides, par un signal optique confiné dans le résonateur opto-mécanique, et en oscillations lentes, par une onde acoustique générée dans la cavité photo-acoustique.

Un faisceau de mesure est envoyé dans le résonateur optique, où il effectue plusieurs passages en passant par l'élément mécanique. Ses propriétés optiques en sortie du résonateur optique sont donc fonction des oscillations de l'élément mécanique.

On peut ainsi obtenir un signal haute fréquence modulé en amplitude à basse fréquence, dans lequel la modulation d'amplitude représente l'onde acoustique dans la chambre de mesure.

L'invention offre une solution précise, à faible bruit, et grande compacité, pour réaliser des mesures à partir d'un effet photo-acoustique.

L'invention n'est pas limitée aux exemples décrits ci-dessus, et de nombreuses variantes peuvent être mises en œuvre sans sortir du cadre de l'invention.

Par exemple, un seul et même faisceau lumineux peut former à la fois le faisceau lumineux de mesure et le faisceau lumineux d'excitation. Dans ce cas, la source d'émission du faisceau lumineux de mesure est confondue avec la source d'émission du faisceau lumineux d'excitation.

Les différentes variantes et modes de réalisation peuvent être combinés ensemble. En particulier, chacun des modes de réalisation d'un capteur photo-acoustique peut présenter une variante sans utilisation d'un faisceau de pompe, et une variante avec utilisation d'un faisceau de pompe, pour réaliser l'auto-oscillation mécanique du résonateur optique.

Selon une variante non représentée, un seul et même faisceau lumineux peut former à la fois le faisceau de pompe et le faisceau lumineux d'excitation. Dans ce cas, la source d'émission du faisceau lumineux de mesure est confondue avec la source d'émission du faisceau de pompe.

Selon une autre variante, le résonateur optique est une cavité linéaire à miroirs non plans, par exemple concaves.

On a développé l'exemple d'une application à la mesure d'une concentration en gaz, mais d'autres applications peuvent être mises en œuvre sans sortir du cadre de l'invention, par exemple la simple détection de présence d'un gaz, la spectroscopie infrarouge de gaz, la spectroscopie visible ou UV de gaz, la spectroscopie de liquide (de préférence en ajoutant un élément chauffant pour vaporiser le liquide dans la chambre de mesure), etc.

## Revendications

1. Elément d'un capteur photo-acoustique (100 ; 700 ; 800 ; 900 ; 1000) comportant :
- une chambre de mesure (110 ; 1010), apte à recevoir un milieu gazeux ou liquide ; et
- une source (130) d'émission d'un faisceau lumineux d'excitation (131; 831 ; 931 ; 1031) modulé en amplitude à une fréquence dite d'excitation ;
l'élément d'un capteur photo-acoustique étant agencé pour que le faisceau lumineux d'excitation (131 ; 831 ; 931 ; 1031) se propage dans la chambre de mesure, et le faisceau lumineux d'excitation présentant une composante spectrale apte à générer une onde de pression dans la chambre de mesure (110 ; 810 ; 1010) en présence d'une caractéristique prédéterminée du milieu gazeux ou liquide, l'onde de pression étant nommée onde acoustique ;
**caractérisé en ce qu'**il comprend en outre :
- un résonateur optique (120 ; 720; 820 ; 920 ; 1020), situé dans la chambre de mesure, et comprenant au moins un élément mécanique (122 ; 860 ; 1020) qui est monté mobile et/ou déformable autour d'une position de retour élastique ou d'une forme de retour élastique ; et
- une source (140 ; 740) d'émission d'un faisceau lumineux de mesure (141 ; 741 ; 841 ; 941 ; 1041), distincte ou confondue avec la source d'émission du faisceau lumineux d'excitation ;
l'élément d'un capteur photo-acoustique (100 ; 700 ; 800 ; 900 ; 1000) étant agencé pour que le faisceau lumineux de mesure (141; 741 ; 841 ; 941; 1041) effectue plusieurs passages dans le résonateur optique (120 ; 720 ; 820; 920 ; 1020) en passant par l'élément mécanique mobile et/ou déformable (122 ; 860 ; 1020), et l'élément mécanique mobile et/ou déformable étant apte à être mis en oscillation à la fois par un signal optique confiné dans le résonateur optique et par l'onde acoustique générée dans la chambre de mesure, ledit signal optique confiné dans le résonateur optique étant formé par le faisceau lumineux de mesure (141 ; 841 ; 941 ; 1041) ou par un faisceau de pompe (751) distinct du faisceau lumineux de mesure.

2. Elément d'un capteur photo-acoustique (100 ; 700 ; 800 ; 900 ; 1000) selon la revendication 1, **caractérisé en ce que** l'élément mécanique mobile et/ou déformable (122 ; 860 ; 1020) est apte à être mis en oscillation par un signal optique confiné dans le résonateur optique (120 ; 720 ; 820 ; 920 ; 1020), à une fréquence d'auto-oscillation mécanique du résonateur optique, et **en ce que** la fréquence d'auto-oscillation mécanique du résonateur optique est au moins dix fois supérieure à la fréquence d'excitation du faisceau lumineux d'excitation (131 ; 831 ; 931 ; 1031).

3. Elément d'un capteur photo-acoustique (100 ; 700 ; 800 ; 900 ; 1000) selon la revendication 1 ou 2, **caractérisé en ce que** le faisceau lumineux de mesure (141 ; 741 ; 841 ; 941 ; 1041) présente un pic d'émission centré sur une longueur d'onde de mesure, la longueur d'onde de mesure étant située sur un pic de résonance (12₀ ; 12(d)) du résonateur optique (120 ; 720 ; 820 ; 920 ; 1020) au repos, le résonateur optique étant dit au repos en l'absence de l'onde acoustique dans la chambre de mesure et en l'absence d'un signal optique confiné dans le résonateur optique.

4. Elément d'un capteur photo-acoustique (100 ; 800 ; 900 ; 1000) selon la revendication 3, **caractérisé en ce que** la longueur d'onde de mesure correspond au maximum dudit pic de résonance (12₀ ; 12(d)).

5. Elément d'un capteur photo-acoustique (700) selon la revendication 3, **caractérisé en ce que** la longueur d'onde de mesure est située sur une pente dudit pic de résonance (12₀ ; 12(*d*)).

6. Elément d'un capteur photo-acoustique (700) selon la revendication 5, **caractérisé en ce que** l'élément d'un capteur photo-acoustique présente en outre une source (750) d'émission du faisceau de pompe (751), le faisceau de pompe présentant un pic d'émission centré sur une longueur d'onde correspondant au maximum d'un pic de résonance (12₀ ; 12(d)) du résonateur optique au repos.

7. Elément d'un capteur photo-acoustique (100 ; 700 ; 800 ; 900 ; 1000) selon l'une quelconque des revendications 1 à 6, **caractérisé en ce que** :
- la source (140 ; 740) d'émission du faisceau lumineux de mesure est distincte de la source (130) d'émission du faisceau lumineux d'excitation ;
- le faisceau lumineux de mesure (141 ; 741 ; 841 ; 941 ; 1041) présente un spectre d'émission situé sur le spectre du visible, entre 400 nm et 800 nm ; et
- le faisceau lumineux d'excitation (131 ; 831 ; 931; 1031) présente un spectre d'émission situé en dehors du spectre visible.

8. Elément d'un capteur photo-acoustique (1000) selon l'une quelconque des revendications 1 à 7, **caractérisé en ce que** le résonateur optique est un micro-résonateur agencé suspendu à l'intérieur de la chambre de mesure (1010), et **en ce que** l'élément mécanique mobile et/ou déformable est formé par le résonateur optique lui-même.

9. Elément d'un capteur photo-acoustique (1000) selon la revendication 8, **caractérisé en ce que** le micro-résonateur est apte à guider un faisceau lumineux selon un chemin optique en boucle fermée, et **en ce qu'**un trajet optique du faisceau lumineux d'excitation (1031) dans la chambre de mesure passe à l'intérieur de ladite boucle fermée.

10. Elément d'un capteur photo-acoustique (100 ; 700 ; 800 ; 900) selon l'une quelconque des revendications 1 à 7, **caractérisé en ce que** le résonateur optique (120 ; 720 ; 820 ; 920 ; 1020) est une cavité linéaire délimitée par deux miroirs (121, 122).

11. Elément d'un capteur photo-acoustique (100 ; 700 ; 800 ; 900) selon la revendication 10, **caractérisé en ce que** l'un des miroirs (122) est agencé mobile et/ou déformable, et forme l'élément mécanique mobile et/ou déformable du résonateur optique.

12. Elément d'un capteur photo-acoustique (900) selon la revendication 10 ou 11, **caractérisé en ce qu'**un chemin optique du faisceau lumineux d'excitation (931) dans la chambre de mesure s'étend sensiblement orthogonal relativement à un chemin optique du faisceau lumineux de mesure (941) dans le résonateur optique, à plus ou moins 10° près.

13. Elément d'un capteur photo-acoustique (100 ; 700 ; 800) selon la revendication 10 ou 11, **caractérisé en ce qu'**un chemin optique du faisceau lumineux d'excitation (131; 831) dans la chambre de mesure s'étend parallèle relativement à un chemin optique du faisceau lumineux de mesure (141 ; 741 ; 841) dans le résonateur optique.

14. Elément d'un capteur photo-acoustique (800) selon la revendication 10, **caractérisé en ce que** les miroirs (121, 122) de la cavité linéaire délimitent également la chambre de mesure, et **en ce que** le résonateur optique comporte en outre une membrane (860) mobile et/ou déformable située à l'intérieur de la cavité linéaire, et formant l'élément mécanique mobile et/ou déformable du résonateur optique (820).

15. Système (10B) comportant un élément d'un capteur photo-acoustique (100) selon l'une quelconque des revendications 1 à 14, **caractérisé en ce qu'**il comprend un interféromètre dont l'un des bras (102) comporte le résonateur optique (120) de l'élément d'un capteur photo-acoustique.

## Patentansprüche

1. Photoakustisches Sensorelement (100; 700; 800; 900; 1000), enthaltend:
- eine Messkammer (110; 1010), die dazu geeignet ist, ein gasförmiges oder flüssiges Medium aufzunehmen; und
- eine Quelle (130) zum Emittieren eines Anregungslichtstrahls (131; 831; 931; 1031), der bei einer Anregungsfrequenz amplitudenmoduliert ist; wobei das photoakustische Sensorelement so angeordnet ist, dass sich der Anregungslichtstrahl (131; 831; 931; 1031) in der Messkammer ausbreitet, und der Anregungslichtstrahl eine Spektralkomponente aufweist, die dazu geeignet ist, in der Messkammer (110; 810; 1010) bei Vorliegen einer vorbestimmten Eigenschaft des gasförmigen oder flüssigen Mediums eine Druckwelle zu erzeugen, wobei die Druckwelle akustische Welle genannt wird; **dadurch gekennzeichnet, dass** es ferner enthält:
- einen optischen Resonator (120; 720; 820; 920; 1020), der sich in der Messkammer befindet und mindestens ein mechanisches Element (122; 860; 1020) umfasst, das beweglich und/oder verformbar um eine rückfedernde Position oder rückfedernde Form herum gelagert ist; und
- eine Quelle (140; 740) zum Emittieren eines Messlichtstrahls (141; 741; 841; 941; 1041), die separat von der Quelle zum Emittieren des Anregungslichtstrahls vorliegt oder mit dieser zusammenfällt;
wobei das photoakustische Sensorelement (100; 700; 800; 900; 1000) so angeordnet ist, dass der Messlichtstrahl (141; 741; 841; 941; 1041) mehrmals durch den optischen Resonator (120; 720; 820; 920; 1020) über das bewegliche und/oder verformbare mechanische Element (122; 860; 1020) hindurchgeht, und wobei das bewegliche und/oder verformbare mechanische Element dazu geeignet ist, sowohl durch ein im optischen Resonator eingeschlossenes optisches Signal als auch durch die in der Messkammer erzeugte akustische Welle in Schwingung versetzt zu werden, wobei das im optischen Resonator eingeschlossene optische Signal durch den Messlichtstrahl (141; 841; 941; 1041) oder durch einen vom Messlichtstrahl verschiedenen Pumpstrahl (751) gebildet wird.

2. Photoakustisches Sensorelement (100; 700; 800; 900; 1000) nach Anspruch 1, **dadurch gekennzeichnet, dass** das bewegliche und/oder verformbare mechanische Element (122; 860; 1020) dazu geeignet ist, durch ein im optischen Resonator (120; 720; 820; 920; 1020) eingeschlossenes optisches Signal in Schwingung versetzt zu werden, und zwar mit einer mechanischen Eigenschwingungsfrequenz des optischen Resonators, und dass die mechanische Eigenschwingungsfrequenz des optischen Resonators mindestens zehnmal höher ist als die Anregungsfrequenz des Anregungslichtstrahls (131; 831; 931; 1031).

3. Photoakustisches Sensorelement (100; 700; 800; 900; 1000) nach Anspruch 1 oder 2, **dadurch gekennzeichnet, dass** der Messlichtstrahl (141; 741; 841; 941; 1041) eine auf eine Messwellenlänge zentrierte Emissionsspitze aufweist, wobei die Messwellenlänge auf einer Resonanzspitze (12₀ ; 12(d)) des optischen Resonators (120; 720; 820; 920; 1020) im Ruhezustand liegt, wobei der optische Resonator bei Ausbleiben der akustischen Welle in der Messkammer und bei Ausbleiben eines im optischen Resonator eingeschlossenen optischen Signals als im Ruhezustand bezeichnet wird.

4. Photoakustisches Sensorelement (100; 800; 900; 1000) nach Anspruch 3, **dadurch gekennzeichnet, dass** die Messwellenlänge dem Maximum der Resonanzspitze (12₀ ; 12(d)) entspricht.

5. Photoakustisches Sensorelement (700) nach Anspruch 3, **dadurch gekennzeichnet, dass** die Messwellenlänge an einer Neigung der Resonanzspitze (12₀ ; 12(d)) liegt.

6. Photoakustisches Sensorelement (700) nach Anspruch 5, **dadurch gekennzeichnet, dass** das photoakustische Sensorelement ferner eine Quelle (750) zum Emittieren des Pumpstrahls (751) aufweist, wobei der Pumpstrahl eine Emissionsspitze aufweist, die auf eine Wellenlänge zentriert ist, die dem Maximum einer Resonanzspitze (12₀ ; 12(d)) des optischen Resonators im Ruhezustand entspricht.

7. Photoakustisches Sensorelement (100; 700; 800; 900; 1000) nach einem der Ansprüche 1 bis 6, **dadurch gekennzeichnet, dass**:
- die Quelle (140; 740) zum Emittieren des Messlichtstrahls von der Quelle (130) zum Emittieren des Anregungslichtstrahls verschieden ist;
- der Messlichtstrahl (141; 741; 841; 941; 1041) ein Emissionsspektrum im sichtbaren Bereich zwischen 400 nm und 800 nm aufweist; und
- der Anregungslichtstrahl (131; 831; 931; 1031) ein Emissionsspektrum außerhalb des sichtbaren Spektrums aufweist.

8. Photoakustisches Sensorelement (1000) nach einem der Ansprüche 1 bis 7, **dadurch gekennzeichnet, dass** der optische Resonator ein Mikroresonator ist, der im Inneren der Messkammer (1010) hängend angeordnet ist, und dass das bewegliche und/oder verformbare mechanische Element aus dem optischen Resonator selbst gebildet ist.

9. Photoakustisches Sensorelement (1000) nach Anspruch 8, **dadurch gekennzeichnet, dass** der Mikroresonator dazu geeignet ist, einen Lichtstrahl entlang eines Strahlengangs mit geschlossener Schleife zu führen, und dass ein Lichtweg des Anregungslichtstrahls (1031) in der Messkammer innerhalb der geschlossenen Schleife verläuft.

10. Photoakustisches Sensorelement (100; 700; 800; 900) nach einem der Ansprüche 1 bis 7, **dadurch gekennzeichnet, dass** der optische Resonator (120; 720; 820; 920; 1020) ein linearer Hohlraum ist, der von zwei Spiegeln (121, 122) begrenzt wird.

11. Photoakustisches Sensorelement (100; 700; 800; 900) nach Anspruch 10, **dadurch gekennzeichnet, dass** einer der Spiegel (122) beweglich und/oder verformbar angeordnet ist und das bewegliche und/oder verformbare mechanische Element des optischen Resonators bildet.

12. Photoakustisches Sensorelement (900) nach Anspruch 10 oder 11, **dadurch gekennzeichnet, dass** sich ein Strahlengang des Anregungslichtstrahls (931) in der Messkammer auf plus oder minus 10° genau im Wesentlichen orthogonal zu einem Strahlengang des Messlichtstrahls (941) im optischen Resonator erstreckt.

13. Photoakustisches Sensorelement (100; 700; 800) nach Anspruch 10 oder 11, **dadurch gekennzeichnet, dass** ein Strahlengang des Anregungslichtstrahls (131; 831) in der Messkammer parallel zu einem Strahlengang des Messlichtstrahls (141; 741; 841) in dem optischen Resonator verläuft.

14. Photoakustisches Sensorelement (800) nach Anspruch 10, **dadurch gekennzeichnet, dass** die Spiegel (121, 122) des linearen Hohlraums auch die Messkammer begrenzen, und dass der optische Resonator ferner eine bewegliche und/oder verformbare Membran (860) enthält, die sich im Inneren des linearen Hohlraums befindet und das bewegliche und/oder verformbare mechanische Element des optischen Resonators (820) bildet.

15. System (10B) mit einem photoakustischen Sensorelement (100) nach einem der Ansprüche 1 bis 14, **dadurch gekennzeichnet, dass** es ein Interferometer enthält, von dem einer der Arme (102) den optischen Resonator (120) des photoakustischen Sensorelements enthält.

## Claims

1. An element of a photo-acoustic sensor (100; 700; 800; 900; 1000) including:
- a measuring chamber (110; 1010), able to receive a gas or liquid medium; and
- a source (130) for emitting an excitation light beam (131; 831; 931; 1031) amplitude modulated at a so-called excitation frequency;
the element of a photo-acoustic sensor being arranged so that the excitation light beam (131; 831; 931; 1031) propagates in the measuring chamber, and the excitation light beam having a spectral component able to generate a pressure wave in the measuring chamber (110; 810; 1010) in the presence of a predetermined characteristic of the gas or liquid medium, the pressure wave being called an acoustic wave;
**characterised in that** it further comprises:
- an optical resonator (120; 720; 820; 920; 1020), located in the measuring chamber, and comprising at least one mechanical element (122; 860; 1020) which is mounted movably and/or deformably around a spring back position or a spring back shape; and
- a source (140; 740) for emitting a measuring light beam (141; 741; 841; 941; 1041), distinct from or identical to the source for emitting the excitation light beam;
wherein the element of a photo-acoustic sensor (100; 700; 800; 900; 1000) is arranged so that the measuring light beam (141; 741; 841; 941; 1041) performs several passages in the optical resonator (120; 720; 820; 920; 1020) by passing through the movable and/or deformable mechanical element (122; 860; 1020), and wherein the movable and/or deformable mechanical element is able to be oscillated both by an optical signal confined in the optical resonator and by the acoustic wave generated in the measuring chamber, said optical signal confined in the optical resonator being formed by the measuring light beam (141; 841; 941; 1041) or by a pump beam (751) distinct from the measuring light beam.

2. The element of a photo-acoustic sensor (100; 700; 800; 900; 1000) according to claim 1, **characterised in that** the movable and/or deformable mechanical element (122; 860; 1020) is able to be oscillated by an optical signal confined in the optical resonator (120; 720; 820; 920; 1020), at a mechanical self-oscillation frequency of the optical resonator, and **in that** the mechanical self-oscillation frequency of the optical resonator is at least ten times greater than the excitation frequency of the excitation light beam (131; 831; 931; 1031).

3. The element of a photo-acoustic sensor (100; 700; 800; 900; 1000) according to claim 1 or 2, **characterised in that** the measuring light beam (141; 741; 841; 941; 1041) has an emission peak centred on a measuring wavelength, the measuring wavelength being located on a resonance peak (12₀ ; 12(*d*)) of the optical resonator (120; 720; 820; 920; 1020) at rest, the optical resonator being said at rest in the absence of an acoustic wave in the measuring chamber and in the absence of an optical signal confined in the optical resonator.

4. The element of a photo-acoustic sensor (100; 800; 900; 1000) according to claim 3, **characterised in that** the measuring wavelength corresponds to the maximum of said resonance peak (12₀ ; 12(*d*)).

5. The element of a photo-acoustic sensor (700) according to claim 3, **characterised in that** the measuring wavelength is located on a slope of said resonance peak (12₀ ; 12(*d*)).

6. The element of a photo-acoustic sensor (700) according to claim 5, **characterised in that** the element of a photo-acoustic sensor further has a source (750) for emitting the pump beam (751), the pump beam having an emission peak centred on a wavelength corresponding to the maximum of a resonance peak (12₀ ; 12(*d*)) of the optical resonator at rest.

7. The element of a photo-acoustic sensor (100; 700; 800; 900; 1000) according to any of claims 1 to 6, **characterised in that**:
- the source (140; 740) for emitting the measuring light beam is distinct from the source (130) for emitting the excitation light beam;
- the measuring light beam (141; 741; 841; 941; 1041) has an emission spectrum located on the visible spectrum, between 400nm and 800nm; and
- the excitation light beam (131; 831; 931; 1031) has an emission spectrum located outside the visible spectrum.

8. The element of a photo-acoustic sensor (1000) according to any of claims 1 to 7, **characterised in that** the optical resonator is a micro-resonator arranged suspended inside the measuring chamber (1010), and **in that** the movable and/or deformable mechanical element is formed by the optical resonator itself.

9. The element of a photo-acoustic sensor (1000) according to claim 8, **characterised in that** the micro-resonator is able to guide a light beam along a closed loop optical path, and **in that** an optical path of the excitation light beam (1031) in the measuring chamber passes inside said closed loop.

10. The element of a photo-acoustic sensor (100; 700; 800; 900) according to any of claims 1 to 7, **characterised in that** the optical resonator (120; 720; 820; 920; 1020) is a linear cavity delimited by two mirrors (121, 122).

11. The element of a photo-acoustic sensor (100; 700; 800; 900) according to claim 10, **characterised in that** one of the mirrors (122) is arranged movable and/or deformable, and forms the movable and/or deformable mechanical element of the optical resonator.

12. The element of a photo-acoustic sensor (900) according to claim 10 or 11, **characterised in that** an optical path of the excitation light beam (931) in the measuring chamber extends substantially orthogonal relative to an optical path of the measuring light beam (941) in the optical resonator, within plus or minus 10°.

13. The element of a photo-acoustic sensor (100; 700; 800) according to claim 10 or 11, **characterised in that** an optical path of the excitation light beam (131; 831) in the measuring chamber extends parallel relative to an optical path of the measuring light beam (141; 741; 841) in the optical resonator.

14. The element of a photo-acoustic sensor (800) according to claim 10, **characterised in that** the mirrors (121, 122) of the linear cavity also delimit the measuring chamber, and **in that** the optical resonator further includes a movable and/or deformable membrane (860) located inside the linear cavity, and forming the movable and/or deformable mechanical element of the optical resonator (820).

15. A system (10B) including an element of a photo-acoustic sensor (100) according to any of claims 1 to 14, **characterised in that** it comprises an interferometer one arm (102) of which includes the optical resonator (120) of the element of a photo-acoustic sensor.
